# EUROPÄISCHE PATENTSCHRIFT

(11) **EP 3 395 664 B1**
(45) Veröffentlichungstag und Bekanntmachung des Hinweises auf die Patenterteilung: **16.12.2020**
(21) Anmeldenummer: 18168370.7
(22) Anmeldetag: 20.04.2018
(51) Int. Cl.: B62M 6/45, B62M 6/50

(54) **SENSORANORDNUNG, BETRIEBSSTEUERVERFAHREN FÜR EINEN ANTRIEB, STEUEREINRICHTUNG UND FAHRZEUG**
SENSOR ASSEMBLY, OPERATION CONTROL METHOD FOR A DRIVE, CONTROL DEVICE AND VEHICLE
DISPOSITIF CAPTEUR, PROCÉDÉ DE COMMANDE DE FONCTIONNEMENT POUR UN ENTRAÎNEMENT, DISPOSITIF DE COMMANDE ET VÉHICULE

(30) Priorität: 24.04.2017 DE 102017206822
(43) Veröffentlichungstag der Anmeldung: 31.10.2018
(73) Patentinhaber: Robert Bosch GmbH, 70442 Stuttgart (DE)
(72) Erfinder: Ossmann, Christoph, 72768 Reutlingen (DE); Konnerth, Egon, 71364 Winnenden (DE)

(56) Entgegenhaltungen:
- EP-A1- 2 165 094
- EP-A1- 3 020 621
- EP-A2- 2 380 806
- DE-A1- 10 253 035

## Beschreibung

### Stand der Technik

Die vorliegende Erfindung betrifft eine Sensoranordnung für den Antrieb eines mit Muskelkraft und zusätzlich mit Motorkraft antreibbaren Fahrzeugs, insbesondere eines Elektrofahrrads, eBikes oder Pedelecs, ein Betriebssteuerverfahren für einen entsprechenden Antrieb, eine Steuereinrichtung für einen derartigen Antrieb sowie ein mit Muskelkraft und zusätzlich mit Motorkraft antreibbares Fahrzeug als solches, insbesondere ein Elektrofahrrad, eBike oder Pedelec.

Elektrische und/oder mit Muskelkraft betreibbare Fahrzeuge sind aus dem Stand der Technik in unterschiedlichen Ausgestaltungen bekannt. Hierbei gibt es beispielsweise Elektrofahrräder, bei denen der elektrische Antrieb im Bereich des Tretlagers angeordnet ist (Mittelmotorkonzept). Über ein Kettenblatt und eine Kette kann ein Hinterrad angetrieben werden. Der elektrische Antrieb ist dabei üblicherweise durch einen Freilauf vom Abtrieb entkoppelt. Hierbei ist es möglich, dass der elektrische Antrieb stoßartig in die Abtriebsseite eingekoppelt wird, wodurch es zu großen Kraft- und Drehmomentspitzen im Antriebsstrang kommen kann. Dies ist beispielsweise der Fall, wenn das Elektrofahrrad rollt und der Fahrer aus dem rollenden Zustand mit Muskelkraft zu pedalieren beginnt und der elektrische Antrieb zugeschaltet werden soll.

Durch den Einsatz von Drehmomentsensoren und durch das Erfassen der muskulär und/oder maschinell eingebrachten Drehmomente können derartige Kraft- und Drehmomentspitzen häufig, jedoch oft nicht in ausreichendem Maß vermieden werden. Insbesondere sind dabei Fälle im Bereich eines so genannten Nullsignals, bei denen die aufgebrachten Kräfte und/oder Drehmomente nahezu verschwinden, nur schwer handhabbar.

In dem Dokument EP 3 020 621 A1, welches als nächstliegender Stand der Technik angesehen wird, ist eine Sensoranordnung gemäß der Präambel von Anspruch 1 und ein Verfahren gemäß der Präambel von Anspruch 4 gezeigt.

### Offenbarung der Erfindung

Die erfindungsgemäße Sensoranordnung mit den Merkmalen des Anspruches 1 weist demgegenüber den Vorteil auf, dass bei einem Antrieb eines mit Muskelkraft und zusätzlich mit Motorkraft antreibbaren Fahrzeugs auch Fälle mit nahezu verschwindendem muskulär aufgebrachtem Drehmoment zuverlässig handhabbar sind. Dies wird erfindungsgemäß mit den Merkmalen des Anspruches 1 dadurch erreicht, dass eine Sensoranordnung für den Antrieb eines mit Muskelkraft und zusätzlich mit Motorkraft antreibbaren Fahrzeugs und insbesondere eines Elektrofahrrads, eBikes oder Pedelecs, geschaffen wird, welches eingerichtet ist, eine Relativbewegung und/oder eine Relativposition eines ersten Koppelelements und eines zweiten Koppelelements eines Koppelmoduls zum Koppeln und Entkoppeln einer Antriebswelle und einer Abtriebswelle des Antriebs zueinander zu detektieren. Um dies zu erreichen, ist die Sensoranordnung erfindungsgemäß ferner dazu eingerichtet, mit einer Relativbewegung und/oder einer Relativposition (i) zwischen dem ersten Koppelelement und einer von Position und Bewegung des Koppelmoduls mechanisch entkoppelten Stelle am zu Grunde liegenden Fahrzeug oder (ii) zwischen den ersten und zweiten Koppelelementen im Zusammenhang stehende magnetische Eigenschaften und/oder Änderungen in einem Weg oder Raumbereich zwischen dem ersten Koppelmodul und der Stelle am zu Grunde liegenden Fahrzeug bzw. zwischen den ersten und zweiten Koppelelementen zu detektieren. Dadurch wird eine Bestimmung des Vorliegens oder Nichtvorliegens eines gekoppelten und/oder eines entkoppelten Zustands zwischen den ersten und zweiten Koppelelementen und damit zwischen der Antriebswelle und der Abtriebswelle des Antriebs möglich oder bewirkt.

Die Unteransprüche zeigen bevorzugte Weiterbildungen der Erfindung.

Die Detektion einer Relativbewegung und/oder einer Relativposition der ersten und zweiten Koppelelemente und somit des Vorliegens oder Nichtvorliegens eines gekoppelten und/oder eines entkoppelten Zustands zwischen Antriebswelle und Abtriebswelle können erfindungsgemäß zusätzlich zur Ausnutzung magnetischer Effekte auf der Grundlage ganz unterschiedlicher Messprinzipien, die auch miteinander beliebig kombiniert werden können, erfolgen.

Die erfindungsgemäße Sensoranordnung ist dazu eingerichtet, eine Relativbewegung und/oder eine Relativposition der ersten und zweiten Koppelelemente zueinander auf der Grundlage und/oder durch Erfassen einer magnetischen Messgröße oder einer davon abgeleiteten Messgröße zu detektieren, welche von der Relativbewegung und/oder der Relativposition der ersten und zweiten Koppelelemente relativ zueinander und/oder des ersten Koppelelements relativ zu einer von Position und Bewegung des Koppelmoduls mechanisch entkoppelten Stelle am zu Grunde liegenden Fahrzeug abhängig ist bzw. sind.

Dabei kann sich die in Rede stehende Stelle am zu Grunde liegenden Fahrzeug, die von der Position und/oder der Bewegung des Koppelmoduls mechanisch entkoppelt ist, zum Beispiel an einem Drehmomentsensor oder dessen Gehäuse oder einem anderen Teil des Antriebs, eines Chassis oder eines Rahmens des zu Grunde liegenden Fahrzeugs befinden, welche mit der Antriebswelle und der Abtriebswelle bei deren Rotation nicht mitbewegt werden.

Bei der Detektion magnetischer Eigenschaften und von deren Änderungen können räumliche Abstände und/oder Orientierungen des ersten und/oder des zweiten Koppelelements, insbesondere in Relation zu einer Stelle, die von der Bewegung der Koppelelemente und insbesondere der Antriebswelle und der Abtriebswelle hinsichtlich von deren Rotation isoliert ist, ermittelt werden, um das Vorliegen oder Nichtvorliegen eines gekoppelten und/oder entkoppelten Zustands der Koppelelemente und entsprechend der Antriebswelle und der Abtriebswelle zu detektieren.

Die erfindungsgemäße Sensoranordnung ist mit einem Magnetsensor als erster Sensorkomponente ausgebildet.

Die erste Sensorkomponente ist (i) an einer von Position und Bewegung des Koppelmoduls mechanisch entkoppelten Stelle am zu Grunde liegenden Fahrzeug oder (ii) mitbeweglich mit dem zweiten Koppelelement (22) ausgebildet. Bei einer vorteilhaften Weiterbildung der erfindungsgemäßen Sensoranordnung ist die erste Sensorkomponente an einem und insbesondere als Teil eines Drehmomentsensors zur - insbesondere magnetischen oder magnetisch basierten - Detektion eines auf die Abtriebswelle wirkenden Drehmoments ausgebildet ist, insbesondere als ein Magnetsensor des Drehmomentensensors.

Andererseits ist zur magnetischen Wechselwirkung mit der ersten Sensorkomponente bei der erfindungsgemäßen Sensoranordnung ein magnetisches oder magnetisch beeinflussendes Geberelement als zweite Sensorkomponente ausgebildet.

Die zweite Sensorkomponente ist mitbeweglich mit dem ersten Koppelelement und zur magnetischen Beeinflussung der ersten Sensorkomponente ausgebildet.

Zur konkreten Ausgestaltung des Geberelements bieten sich unterschiedliche materielle Ausführungsformen an.

So kann die zweite Sensorkomponente als Magnet, als magnetischer Materialbereich am oder im ersten Koppelelement ausgebildet sein, zum Beispiel als Materialbereich des ersten Koppelelements, welcher mit einer Magnetisierung modifiziert ist.

Bei einer erfindungsgemäßen Sensoranordnung ist diese ausgebildet mit einem Magnetsensor als erster Sensorkomponente, insbesondere (i) an einer von Position und Bewegung des Koppelmoduls mechanisch entkoppelten Stelle am zu Grunde liegenden Fahrzeug oder (ii) mitbeweglich mit dem zweiten Koppelelement, und/oder mit einem Geberelement, insbesondere einem Magneten, als zweiter Sensorkomponente mitbeweglich mit dem ersten Koppelelement zur magnetischen Beeinflussung des Magnetsensors.

Die erste Sensorkomponente kann von der Bewegung des Koppelmoduls und insbesondere der ersten und zweiten Koppelelemente hinsichtlich der Rotation entkoppelt an einer Stelle eines Drehmomentensensors, eines Gehäuses, eines Chassis oder eines Rahmens des Fahrzeugs angeordnet sein.

Die vorliegende Erfindung betrifft des Weiteren ein Betriebssteuerverfahren zur Ermittlung eines gekoppelten und/oder entkoppelten Zustands zwischen einem ersten und einem zweiten Kopplungselement (21, 22) eines Koppelmoduls (20) einer Antriebswelle (15) und einer Abtriebswelle (16) eines Antriebs (80) eines mit Muskelkraft und zusätzlich mit Motorkraft antreibbaren Fahrzeugs (1), insbesondere eines Elektrofahrrads, eBikes oder Pedelecs, mit
- einer ersten Sensorkomponenten (81), die wenigstens einen Magnetsensor (52) aufweist, wobei die erste Sensorkomponente (81)
   o (i) an einer von Position und Bewegung des Koppelmoduls (20) mechanisch entkoppelten Stelle am zu Grunde liegenden Fahrzeug (1) oder
   o (ii) mitbeweglich mit dem zweiten Koppelelement (22) ausgebildet ist, und
- einer zweiten Sensorkomponenten (82), die ein magnetisches oder magnetisch beeinflussendes Geberelement aufweist, wobei die zweite Sensorkomponente (82) mitbeweglich mit dem ersten Koppelelement (21) zur magnetischen Beeinflussung der ersten Sensorkomponente (81) ausgebildet ist, wobei das Betriebsteuerverfahren,
- eine Relativbewegung und/oder eine Relativposition der ersten und zweiten Koppelelemente (21, 22) zueinander auf der Grundlage einer magnetischen Messgröße oder einer davon abgeleiteten Messgröße detektiert, welche von der Relativbewegung und/oder der Relativposition der ersten und zweiten Koppelelemente (21, 22) zueinander und/oder des ersten Koppelelements (21) relativ zu einer von Position und Bewegung des Koppelmoduls (20) mechanisch entkoppelten Stelle am zu Grunde liegenden Fahrzeug (1) abhängig ist bzw. sind, und
- das Vorliegen oder Nichtvorliegen eines gekoppelten und/oder eines entkoppelten Zustands zwischen den ersten und zweiten Koppelelementen (21, 22) und damit der Antriebswelle (15) und der Abtriebswelle (60) des Antriebs (80) aus der Relativbewegung und/oder eine Relativposition der ersten und zweiten Koppelelemente (21, 22) ermittelt.

Bei dem erfindungsgemäßen Betriebssteuerverfahren werden eine Relativbewegung und/oder eine Relativposition der ersten und zweiten Koppelelemente zueinander auf der Grundlage eines Werts magnetischen Messgröße oder einer davon abgeleiteten Messgröße detektiert, welche von der Relativbewegung und/oder der Relativposition der ersten und zweiten Koppelelemente zueinander abhängig sind.

Es ist von besonderem Vorteil, wenn bei dem erfindungsgemäßen Betriebssteuerverfahren eine Sensoranordnung verwendet wird, welche gemäß der vorliegenden Erfindung ausgestaltet ist.

Gemäß einem anderen Aspekt der vorliegenden Erfindung wird eine Steuereinrichtung für den Antrieb eines mit Muskelkraft und zusätzlich mit Motorkraft antreibbaren Fahrzeugs und insbesondere eines Elektrofahrrads, eBikes oder Pedelecs, vorgeschlagen, welche eingerichtet ist, ein Betriebssteuerverfahren gemäß der vorliegenden Erfindung auszuführen,

Zusätzlich weist die erfindungsgemäße Steuereinrichtung eine Sensoranordnung gemäß der vorliegenden Erfindung und/oder eine Kommunikationsverbindung mit einer Sensoranordnung gemäß der vorliegenden Erfindung auf.

Schließlich wird durch die vorliegende Erfindung auch ein mit Muskelkraft und zusätzlich mit Motorkraft antreibbares Fahrzeugs insbesondere ein Elektrofahrrad, eBike oder Pedelec definiert.

Das erfindungsgemäße Fahrzeug ist ausgebildet mit einem Antrieb, mit mindestens einem mit dem Antrieb antreibbaren Rad, mit einer Steuereinrichtung zur Steuerung des Antriebs, welche insbesondere auf der Grundlage der vorliegenden Erfindung ausgestaltet ist, sowie mit einer Sensoranordnung gemäß der vorliegenden Erfindung.

### Kurzbeschreibung der Figuren

Unter Bezugnahme auf die beigefügten Figuren werden Ausführungsformen der Erfindung im Detail beschrieben.
- Figur 1: ist eine schematische Darstellung für ein Beispiel eines Fahrzeugs nach Art eines Elektrofahrrads, bei welchem eine erste Ausführungsform der Erfindung realisiert ist.
- Figuren 2 und 3: zeigen schematische und teilweise geschnittene Seitenansichten einer bevorzugten Ausgestaltungsformen des erfindungsgemäßen Antriebs unter Verwendung einer Ausführungsform der erfindungsgemäßen Sensoranordnung, und zwar gekoppelten bzw. im entkoppelten Zustand der Antriebswelle und der Abtriebswelle mit- bzw. voneinander.

### Bevorzugte Ausführungsformen der Erfindung

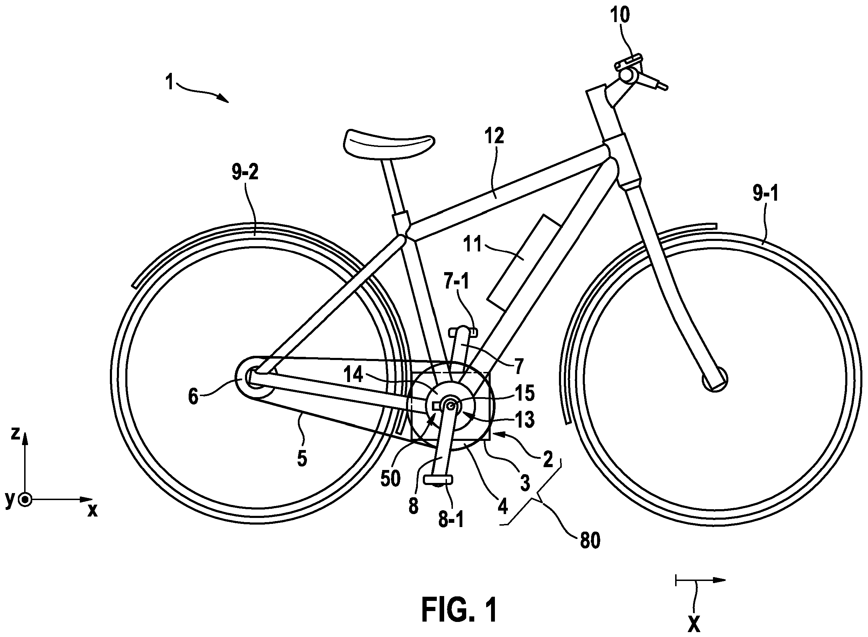

Nachfolgend werden unter Bezugnahme auf die Figuren 1 bis 3 Ausführungsbeispiele der Erfindung und der technische Hintergrund im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form voneinander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeugs 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 als muskulärer Antrieb 2' mit zwei Kurbeln 7, 8 mit Pedalen 7-1 und 8-1 angeordnet sind. Ein elektrischer Antrieb 3 ist als maschineller Antrieb 3' in den Kurbeltrieb 2 integriert und dazu ausgebildet, mit einer Abtriebswelle 16 steuerbar koppelbar zu sein. Am Hinterrad 9-2 ist eine Gangschaltung 6 angeordnet.

Ein Antriebsmoment, welches durch den Fahrer und/oder durch den elektrischen Antrieb 3 bereitgestellt wird, wird von einem Kettenblatt als Abtriebselement 4 am Kurbeltrieb 2 über eine Kette 5 auf ein Ritzel der Gangschaltung 6 übertragen. Das Abtriebselement 4 ist drehfest mit der Abtriebswelle 16 verbunden.

Am Lenker des Fahrzeuges 1 ist ferner eine Steuereinheit 10 angeordnet, welche mit dem elektrischen Antrieb 3 verbunden ist. Im oder am Rahmen 12 ist ferner Batterie 11 ausgebildet, welche zur Stromversorgung des elektrischen Antriebes 3 dient.

Im Rahmen 12 integriert ist ferner ein Kurbellager 13 oder Tretlager, welches ein Kurbelgehäuse 14 und eine Kurbelwelle 15 aufweist.

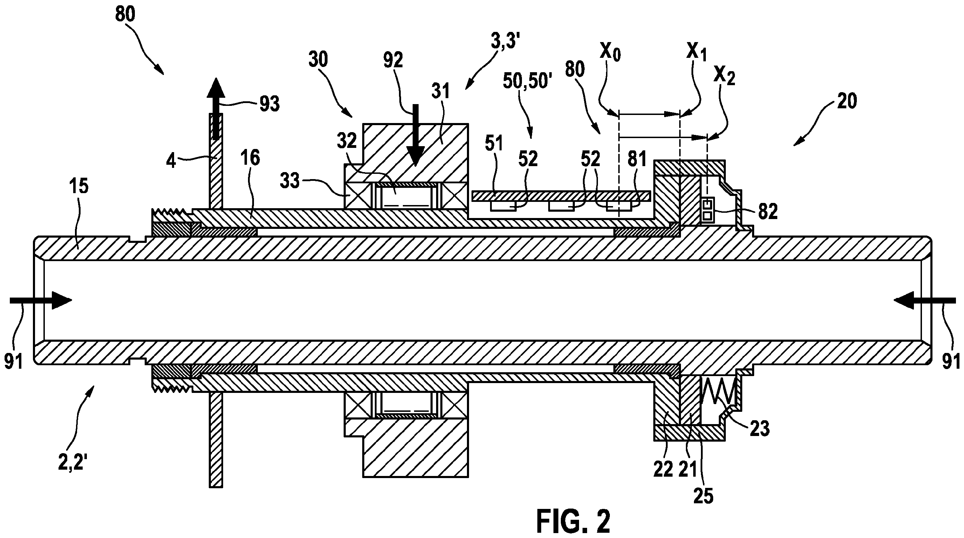

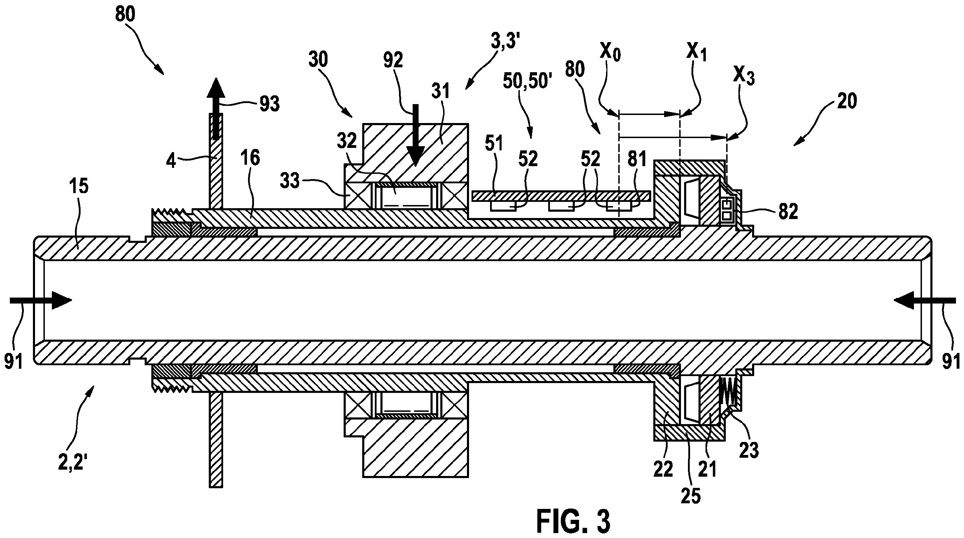

Im Bereich des Kurbelgehäuses 14 ist des Weiteren eine Ausführungsform der erfindungsgemäßen Sensoranordnung 50 ausgebildet, und zwar insbesondere im Zusammenhang mit einem Drehmomentsensor 50'. Erstere dient erfindungsgemäß der Plausibilisierung eines erfassten Antriebszustands des Antriebs 80 und insbesondere der Detektion des Vorliegens oder Nichtvorliegens eines gekoppelten und/oder eines entkoppelten Zustands der Antriebswelle 15 und der Abtriebswelle 16 bzw. damit in Zusammenhang stehender erster und zweiter Koppelelemente 21 und 22 eines zu Grunde liegenden Koppelmoduls 20, durch welche ein Entkoppeln der Antriebswelle 15 und der Abtriebswelle 16 vermittelt wird. Letztere dient der standardmäßigen Erfassung des auf die Abtriebswelle 16 wirkenden Gesamtmoments und weist dazu insbesondere eine Mehrzahl von Magnetsensoren 52 auf einem Träger 51 auf, wie dies in den Figuren 2 und 3 im Detail beschrieben ist.

Die Figuren 2 und 3 zeigen schematische und teilweise geschnittene Seitenansichten einer bevorzugter Ausgestaltungsform des erfindungsgemäßen Antriebs 80 unter Verwendung einer Ausführungsform der erfindungsgemäßen Sensoranordnung 50, und zwar im gekoppelten Zustand bzw. im entkoppelten Zustand von Antriebswelle 15 und Abtriebswelle 16 und entsprechend vom ersten Koppelelement 21 und zweitem Koppelelement 22 des Koppelmoduls 20.

Zunächst werden unter gemeinsamer Bezugnahme diejenigen Aspekte des Antriebs 80 gemäß der vorliegenden Erfindung beschrieben, welche auch für die Figuren 2 und 3 gemeinsam relevant sind.

Der erfindungsgemäße Antrieb 80 weist dem Kern nach einen Kurbeltrieb 2 für den muskulären Antrieb 2' und einen Motor 3 für den maschinellen oder elektrischen Antrieb 3' auf.

Der muskulärer Antrieb 2' mit dem Kurbeltrieb 2 ist mit einer Kurbelwelle als Antriebswelle 15 ausgebildet, welche über ein Koppelmodul 20 mit einer Abtriebswelle 16 in Form einer Drehmomenthülse mechanisch koppelbar ist, um ein auf die Antriebswelle 15 aufgebrachtes Antriebsmoment an die Abtriebswelle 16 und das damit drehfest verbundene Abtriebselements 4, zum Beispiel in Form eines Kettenblatts, zu übertragen.

Zur Kopplung weist das Koppelmodul 20 ein erstes Koppelelement 21 auf, welches drehfest mit der Antriebswelle 15, nicht der Kurbelwelle, verbunden ist. Des Weiteren weist das Koppelmodul 20 ein zweites Koppelelement 22 auf, welches drehfest mit der Abtriebswelle 16, nämlich der Drehmomenthülse verbunden ist. Umschlossen werden die Koppelelemente 21 und 22 von einem Gehäuse 25, welches ebenfalls drehfest verbunden ist mit der Antriebswelle 15.

Die Antriebswelle 15 und die Abtriebswelle 16 sind koaxial zueinander ausgebildet, wobei die Drehmomenthülse als Abtriebswelle 16 einen Teil der Kurbelwelle als Antriebswelle 15 umschließt und an dieser über ein Lager 16-1 drehbar gelagert ist.

Innerhalb des Gehäuses 25 des Koppelmoduls 20 ist das erste Koppelelement 21 axial verschieblich ausgebildet und mittels einer Feder 23 mit einer von der Feder 23 abgewandten Stirnfläche gegen eine der Feder 23 zugewandte Stirnfläche des zweiten Koppelelement 22 vorgespannt.

Zum Beispiel können die ersten und zweiten Koppelelemente 21 und 22 als Stirnräder mit Stirn- oder Hirthverzahnungen ausgebildet sein, welche im gekoppelten Zustand, welcher in Figur 2 gezeigt ist, miteinander eingreifen oder kämmen und welche im entkoppelten Zustand, bei welchem das erste Koppelelement 21 entgegen der Kraft der Feder 23 in der Figur 3 nach rechts verschoben ist, außer Eingriff sind und nicht miteinander kämmen.

Dargestellt ist des Weiteren eine erfindungsgemäß ausgestaltete Sensoranordnung 50 im Zusammenhang mit einem Drehmomentsensor 50'zu Erfassung des auf die Abtriebswelle 16 wirkenden Gesamtmoments 93. Diese Sensoranordnung 50 ist also neben der erfindungsgemäßen Ausgestaltung auch dazu ausgebildet, das auf die Abtriebswelle 16 wirkende gesamte Drehmoment 93 zu ermitteln. Dies geschieht über eine Mehrzahl von Magnetsensoren 52, zum Beispiel in Form von Hallsensoren, welche durch die mechanischen Deformationen auf Grund der aufgebrachten Drehmomente an der Oberfläche der als Torsionshülse ausgebildeten Abtriebswelle 16 erzeugte Magnetfeldänderungen detektieren. Die Hallsensoren 52 sind auf der Unterseite eines Trägers 51 montiert, welche der Oberfläche der Abtriebswelle 16 zugewandt ist.

Das muskuläre Antriebsmoment 91 wird der Kurbelwelle als Antriebswelle 15 über die in Figur 1 dargestellten Kurbeln 7 und 8 mit den Pedalen 7-1 und 8-1 zugeführt. Erfolgt kein Pedalieren, so geraten auf Grund der entsprechenden Ausgestaltung der Hirthverzahnungen der ersten und zweiten Koppelelemente 21 und 22 oder auf Grund anderer Maßnahmen die ersten und zweiten Koppelelemente 21 und 22 außer Eingriff, indem sich das erste Koppelelement 21 entgegen der Kraft der Feder 23 in Figur 2 axial nach rechts in den Zustand gemäß Figur 3 bewegt und sich dadurch mit seiner von der Feder 23 abgewandten Stirnfläche von der der Feder 23 zugewandte Stirnfläche des zweiten Koppelelements 22 entfernt. In einem derart entkoppelten Zustand sind die Antriebswelle 15 und die Abtriebswelle 16 gegeneinander rotierbar.

Das vom Motor 3 des maschinellen Antriebs 3' erzeugte maschinelle Antriebsmoment 92 wird über ein Getriebe 30 mit Stirnrad 31, welches über einen steuerbaren Freilauf 32 mit der Abtriebswelle 16 steuerbar koppelbar ist, auf die Abtriebswelle 16 übertragen. Das Stirnrad 31 des Getriebes 30 und die Abtriebswelle 16 sind gegeneinander über ein Lager 33 drehbar gelagert.

Bei der Ausführungsform gemäß den Figuren 2 und 3 wird einer der Hallsensoren 52 des Drehmomentensensors 50', welcher zur Erfassung des Drehmoments auf der als Torsionshülse ausgestalteten Abtriebswelle 16 ausgebildet ist, zum Aufbau der erfindungsgemäßen Sensoranordnung 50 als erste Sensorkomponente 81, nämlich als Magnetsensor, einer magnetischen Messeinheit 80 verwendet der erfindungsgemäßen Sensoranordnung 50 herangezogen.

Bei der Ausführungsform gemäß den Figuren 2 und 3 befindet sich die erste Sensorkomponente 81 der magnetischen Messeinheit 80 somit an einer Stelle am Fahrzeug 1, welche von den Bewegungen und insbesondere von der Rotation der ersten und zweiten Koppelelemente 21 und 22 des Koppelmoduls 20 und somit von der entsprechenden Rotation der Antriebswelle 15 und der Abtriebswelle 16 entkoppelt ist.

Als zweite Sensorkomponente 82 der magnetischen Messeinheit 80 ist im Bereich des ersten Koppelelements 21 des Koppelmoduls 20 ein Geberelement 82 in Form eines Magneten oder magnetischen Bereichs ausgebildet. Auf Grund der axialen Verschiebung des ersten Koppelelements 21 gegenüber dem zweiten Koppelelement 22 des Koppelmoduls 20 beim Übergang zwischen gekoppeltem und entkoppeltem Zustand erfolgt die Verschiebung des Geberelements 82 von der Position X2 im gekoppelten Zustand gemäß Figur 2 zur Position X3 im entkoppelten Zustand gemäß Figur 3, wobei die erste Sensorkomponente 81 in Form des gemeinsamen Magnetsensors 52 des Drehmomentensensors 50' und der Sensoranordnung 50 am mechanisch entkoppelten Ort X0 verbleibt.

Diese Ortsverschiebung des Geberelements als zweiter Sensorkomponente 82 der magnetischen Messeinheit 80 liefert eine messbare Veränderung der magnetischen Feldverteilung, welche durch die erste Sensorkomponente 81, nämlich durch den Magnetsensor 52 des Drehmomentensensors 50' erfassbar ist. Auf diese Weise lässt sich aus der veränderten Feldgeometrie auf das Vorliegen oder Nichtvorliegen eines gekoppelten und/oder entkoppelten Zustands der ersten und zweiten Koppelelemente 21 und 22 und folglich der Antriebswelle 15 im Verhältnis zur Abtriebswelle 16 ermitteln.

Diese und weitere Merkmale und Eigenschaften der vorliegenden Erfindung werden an Hand der folgenden Darlegungen weiter erläutert:
Zur Regelung eines eBike-Motors 3 wird häufig ein Drehmomentsensor 50, 52 eingesetzt. Dieser wird dazu verwendet, eine intuitive Unterstützung abhängig von der durch den Fahrer aufgebrachten Kraft und/oder abhängig vom aufgebrachten Fahrraddrehmoment zu bewirken.

Für die Verwendung des Drehmomentsignals als Steuersignal oder Fahrsignal sind besonders der Wert und/oder die Genauigkeit bei einem aufgebrachten Fahrraddrehmoment im Bereich von 0 Nm entscheidend, weil in diesem Bereich über die Zu- und/oder Abschaltung des unterstützenden Motors 3 entschieden wird.

Einige Sensorsysteme 52 sind auf Grund bestimmter Einflüsse während eines Betriebs mit einer Betriebsbedingung im Nullsignal fehleranfällig. Dies betrifft den so genannten Offset und/oder die Offsetmodulation.

Der Fehler, der sich als Offset und/oder als Offset Modulation auf das Drehmomentsignal auswirkt, soll durch die vorliegende Erfindung plausibilisiert werden, um sicherzustellen, dass der unterstützende Motor 3 entsprechend der Fahrsituation innerhalb der geforderten Zeitspanne ein- oder ausgeschaltet wird.

Ein Kernaspekt der vorliegenden Erfindung besteht darin, ein zusätzliches Sensorsystem oder Messsystem, nämlich in Form einer zusätzlichen magnetischen Messeinheit 80, zu verwenden und/oder auszubilden, um das Anliegen oder Nichtanliegen eines Fahrraddrehmoments, insbesondere innerhalb bestimmter Grenzen, zu verifizieren.

Ein Aspekt der vorliegenden Erfindung besteht in der Verwendung eines zusätzlichen magnetischen Sensorsystems 80, um dadurch das erste Koppelelement 21 zu überwachen und damit das Anliegen oder Nichtanliegen eines Fahrraddrehmoments und so das Vorliegen oder Nichtvorliegen eines Drehmomentsignals zu plausibilisieren.

Es geht dabei insbesondere um den Einsatz eines zusätzlichen magnetisches Bauteils 82 im Sinne eines Geberelements, welches die Bewegung - zum Beispiel axial und/oder radial - des ersten Koppelelements 21 erfährt und durch dessen Positionsänderung, insbesondere im Sinne einer relativen Bewegung zum Drehmomentsensor im Sinne eines Magnetsensors 82, das vorhandene Drehmomentsignal beeinflusst.

Ein Vorteil aus dieser zusätzlichen definierten Modulation besteht darin, dass eine weitere Information in das Drehmomentsignal zum Beispiel der ohnehin vorhandenen Magnetsensoren 52 eingeprägt werden kann, wodurch das Drehmomentsignal eine Charakteristik erhält, welche eine klare Erkennung des Zustands als gekoppelter oder als entkoppelter Kraftfluss ermöglicht.

Bei einer Ausführungsform der Variante (3) kann der betrachtete Drehmomentsensor 50' im Sinne eines Teils der erfindungsgemäßen Sensoranordnung 50 als ein Sensor basierend auf dem magnetostriktiven Effekt ausgebildet sein. In diesem Fall ist der verwendete Sensor ebenfalls in der magnetischen Domäne beeinflussbar.

In den mechanischen Aufbau wird auf der axial beweglichen Seite des Koppelmoduls 20, also am ersten Koppelelement 21 eine axiale Magnetisierung nach Art eines Geberelements als zweite Sensorkomponente 82 eingebracht. Dabei kann das erste Koppelmodul 21 selbst oder ein zusätzlich eingebrachtes Bauteil diese Magnetisierung repräsentieren. Wird das mechanische Bauteil des ersten Koppelelements 21 auf Grund von der Entkopplungsaktivierung ausgerückt, zum Beispiel in axialer Weise, wie dies in Figur 2 und 3 dargestellt ist, entsteht eine größere Entfernung X0 zwischen dem Sensorelement 52 als erster Sensorkomponente 81 und der eingebrachten Magnetisierung, 82. Dies führt im Sensorelement 51 als erster Sensorkomponente 81 zu einem Offsetversatz und/oder zu einer Offsetmodulation. Diese Signalcharakteristik wird genutzt, um den Status mit einem gekoppelten bzw. einem entkoppelten Kraftfluss sicher zu detektieren.

## Patentansprüche

1. Sensoranordnung (50) zur Ermittlung eines gekoppelten und/oder entkoppelten Zustands zwischen einem ersten und einem zweiten Kopplungselement (21, 22) eines Koppelmoduls (20) einer Antriebswelle (15) und einer Abtriebswelle (16) eines Antriebs (80) eines mit Muskelkraft und zusätzlich mit Motorkraft antreibbaren Fahrzeugs (1), insbesondere eines Elektrofahrrads, eBikes oder Pedelecs, mit
• einer ersten Sensorkomponenten (81), die wenigstens einen Magnetsensor (52) aufweist,
wobei die erste Sensorkomponente (81)
∘ (i) an einer von Position und Bewegung des Koppelmoduls (20) mechanisch entkoppelten Stelle am zu Grunde liegenden Fahrzeug (1) oder
∘ (ii) mitbeweglich mit dem zweiten Koppelelement (22) ausgebildet ist, und
• einer zweiten Sensorkomponenten (82), die ein magnetisches oder magnetisch beeinflussendes Geberelement aufweist,
wobei die zweite Sensorkomponente (82) mitbeweglich mit dem ersten Koppelelement (21) zur magnetischen Beeinflussung der ersten Sensorkomponente (81) ausgebildet ist,
**dadurch gekennzeichnet, dass**
die Sensoranordnung (50) eingerichtet ist,
• eine Relativbewegung und/oder eine Relativposition der ersten und zweiten Koppelelemente (21, 22) zueinander auf der Grundlage einer magnetischen Messgröße oder einer davon abgeleiteten Messgröße zu detektieren, welche von der Relativbewegung und/oder der Relativposition der ersten und zweiten Koppelelemente (21, 22) zueinander und/oder des ersten Koppelelements (21) relativ zu einer von Position und Bewegung des Koppelmoduls (20) mechanisch entkoppelten Stelle am zu Grunde liegenden Fahrzeug (1) abhängig ist bzw. sind, und
• das Vorliegen oder Nichtvorliegen eines gekoppelten und/oder eines entkoppelten Zustands zwischen den ersten und zweiten Koppelelementen (21, 22) und damit der Antriebswelle (15) und der Abtriebswelle (60) des Antriebs (80) aus der Relativbewegung und/oder eine Relativposition der ersten und zweiten Koppelelemente (21, 22) zu ermitteln.

2. Sensoranordnung (50) nach Anspruch 1,
bei welcher die erste Sensorkomponente (81) an einem und insbesondere als Teil eines Drehmomentsensors (50') zur - insbesondere magnetischen oder magnetisch basierten - Detektion eines auf die Abtriebswelle (16) wirkenden Drehmoments ausgebildet ist, insbesondere als ein Magnetsensor (52) des Drehmomentensensors (50').

3. Sensoranordnung (50) nach Anspruch 1 oder 2,
bei welcher die zweite Sensorkomponente (82) als Magnet, als magnetischer Materialbereich am oder im ersten Koppelelement (21) ausgebildet ist, insbesondere als Materialbereich des ersten Koppelelements (21), welcher mit einer Magnetisierung modifiziert ist.

4. Betriebssteuerverfahren zur Ermittlung eines gekoppelten und/oder entkoppelten Zustands zwischen einem ersten und einem zweiten Kopplungselement (21, 22) eines Koppelmoduls (20) einer Antriebswelle (15) und einer Abtriebswelle (16) eines Antriebs (80) eines mit Muskelkraft und zusätzlich mit Motorkraft antreibbaren Fahrzeugs (1), insbesondere eines Elektrofahrrads, eBikes oder Pedelecs, mit
• einer ersten Sensorkomponenten (81), die wenigstens einen Magnetsensor (52) aufweist,
wobei die erste Sensorkomponente (81)
∘ (i) an einer von Position und Bewegung des Koppelmoduls (20) mechanisch entkoppelten Stelle am zu Grunde liegenden Fahrzeug (1) oder
∘ (ii) mitbeweglich mit dem zweiten Koppelelement (22) ausgebildet ist, und
• einer zweiten Sensorkomponenten (82), die ein magnetisches oder magnetisch beeinflussendes Geberelement aufweist,
wobei die zweite Sensorkomponente (82) mitbeweglich mit dem ersten Koppelelement (21) zur magnetischen Beeinflussung der ersten Sensorkomponente (81) ausgebildet ist,
**dadurch gekennzeichnet, dass**
das Betriebsteuerverfahren,
• eine Relativbewegung und/oder eine Relativposition der ersten und zweiten Koppelelemente (21, 22) zueinander auf der Grundlage einer magnetischen Messgröße oder einer davon abgeleiteten Messgröße detektiert, welche von der Relativbewegung und/oder der Relativposition der ersten und zweiten Koppelelemente (21, 22) zueinander und/oder des ersten Koppelelements (21) relativ zu einer von Position und Bewegung des Koppelmoduls (20) mechanisch entkoppelten Stelle am zu Grunde liegenden Fahrzeug (1) abhängig ist bzw. sind, und
• das Vorliegen oder Nichtvorliegen eines gekoppelten und/oder eines entkoppelten Zustands zwischen den ersten und zweiten Koppelelementen (21, 22) und damit der Antriebswelle (15) und der Abtriebswelle (60) des Antriebs (80) aus der Relativbewegung und/oder eine Relativposition der ersten und zweiten Koppelelemente (21, 22) ermittelt.

5. Steuereinrichtung (10) für den Antrieb (80) eines mit Muskelkraft und zusätzlich mit Motorkraft antreibbaren Fahrzeugs (1), insbesondere eines Elektrofahrrads, eBikes oder Pedelecs, welche
- eingerichtet ist, ein Betriebssteuerverfahren nach Anspruch 4 auszuführen, und
- eine Sensoranordnung (50) nach einem der Ansprüche 1 bis 3 oder eine Kommunikationsverbindung mit einer Sensoranordnung (50) nach einem der Ansprüche 1 bis 3 aufweist.

6. Mit Muskelkraft und zusätzlich mit Motorkraft antreibbares Fahrzeug (1), insbesondere Elektrofahrrad, eBike oder Pedelec, mit
- einem Antrieb (80),
- mindestens einem mit dem Antrieb (80) antreibbaren Rad (9-2),
- einer Steuereinrichtung (10) zur Steuerung des Antriebs (80), insbesondere nach Anspruch 5, sowie
- einer Sensoranordnung (50) nach einem der Ansprüche 1 bis 3.

## Claims

1. Sensor arrangement (50) for determining a coupled and/or uncoupled state between a first and a second coupling element (21, 22) of a coupling module (20) of a drive shaft (15) and an output shaft (16) of a drive (80) of a vehicle (1) which can be driven by muscle power and additionally by motor power, in particular an electric bicycle, ebike or pedelec, comprising
• a first sensor component (81) which has at least one magnet sensor (52),
wherein the first sensor component (81) is formed
° (i) at a point on the underlying vehicle (1), which point is mechanically uncoupled from the position and movement of the coupling module (20), or is designed
° (ii) so as to move together with the second coupling element (22), and
• a second sensor component (82) which has a magnetic or magnetically influencing transmitter element, wherein the second sensor component (82) is designed so as to move together with the first coupling element (21) for magnetically influencing the first sensor component (81),
**characterized in that**
the sensor arrangement (50) is designed
• to detect a relative movement and/or a relative position of the first and second coupling elements (21, 22) in relation to one another on the basis of a magnetic measurement variable or a measurement variable derived therefrom which is or are dependent on the relative movement and/or the relative position of the first and second coupling elements (21, 22) in relation to one another and/or of the first coupling element (21) relative to a point on the underlying vehicle (1), which point is mechanically uncoupled from the position and movement of the coupling module (20), and
• to determine the presence or absence of a coupled and/or an uncoupled state between the first and second coupling elements (21, 22) and therefore of the drive shaft (15) and the output shaft (60) of the drive (80) from the relative movement and/or a relative position of the first and second coupling elements (21, 22).

2. Sensor arrangement (50) according to Claim 1, in which the first sensor component (81) is formed on a and in particular as part of a torque sensor (50') for detecting - in particular magnetically or on a magnetic basis - a torque acting on the output shaft (16), in particular as a magnet sensor (52) of the torque sensor (50') .

3. Sensor arrangement (50) according to Claim 1 or 2, in which the second sensor component (82) is designed as a magnet, as a magnetic material region on the or in the first coupling element (21), in particular as a material region of the first coupling element (21) which is modified by magnetization.

4. Operating control method for determining a coupled and/or uncoupled state between a first and a second coupling element (21, 22) of a coupling module (20) of a drive shaft (15) and an output shaft (16) of a drive (80) of a vehicle (1) which can be driven by muscle power and additionally by motor power, in particular of an electric bicycle, ebike or pedelec, comprising
• a first sensor component (81) which has at least one magnet sensor (52),
wherein the first sensor component (81) is formed
° (i) at a point on the underlying vehicle (1), which point is mechanically uncoupled from the position and movement of the coupling module (20), or is designed
° (ii) so as to move together with the second coupling element (22), and
• a second sensor component (82) which has a magnetic or magnetically influencing transmitter element, wherein the second sensor component (82) is designed so as to move together with the first coupling element (21) for magnetically influencing the first sensor component (81),
**characterized in that**
the operating control method
• detects a relative movement and/or a relative position of the first and second coupling elements (21, 22) in relation to one another on the basis of a magnetic measurement variable or a measurement variable derived therefrom which is or are dependent on the relative movement and/or the relative position of the first and second coupling elements (21, 22) in relation to one another and/or of the first coupling element (21) relative to a point on the underlying vehicle (1), which point is mechanically uncoupled from the position and movement of the coupling module (20), and
• determines the presence or absence of a coupled and/or an uncoupled state between the first and second coupling elements (21, 22) and therefore of the drive shaft (15) and the output shaft (60) of the drive (80) from the relative movement and/or a relative position of the first and second coupling elements (21, 22).

5. Control device (10) for the drive (80) of a vehicle (1) which can be driven by muscle power and additionally by motor power, in particular an electric bicycle, ebike or pedelec, which
- is designed to execute an operating control method according to Claim 4, and
- has a sensor arrangement (50) according to one of Claims 1 to 3 or a communications link to a sensor arrangement (50) according to one of Claims 1 to 3.

6. Vehicle (1) which can be driven by muscle power and additionally by motor power, in particular electric bicycle, ebike or pedelec, comprising
- a drive (80),
- at least one wheel (9-2) which can be driven by the drive (80),
- a control device (10) for controlling the drive (80), in particular according to Claim 5, and
- a sensor arrangement (50) according to one of Claims 1 to 3.

## Revendications

1. Ensemble de capteurs (50) permettant de déterminer un état accouplé et/ou désaccouplé entre un premier et un deuxième élément d'accouplement (21, 22) d'un module d'accouplement (20) d'un arbre menant (15) et d'un arbre mené (16) d'un dispositif d'entraînement (80) d'un véhicule (1) pouvant être entraîné par la force musculaire et en plus par une force de moteur, en particulier d'un vélo électrique, d'un e-bike ou d'un pédélec, comprenant
• un premier composant de capteur (81) qui présente au moins un capteur magnétique (52),
le premier composant de capteur (81) étant réalisé
o (i) à un endroit mécaniquement désaccouplé de la position et du mouvement du module d'accouplement (20) sur le véhicule (1) de base, ou
o (ii) en pouvant se déplacer avec le deuxième élément d'accouplement (22), et
• un deuxième composant de capteur (82) qui présente un élément transmetteur magnétique ou ayant une influence magnétique,
le deuxième composant de capteur (82) étant réalisé en pouvant se déplacer avec le premier élément d'accouplement (21) pour exercer une influence magnétique sur le premier composant de capteur (81),
**caractérisé en ce que** l'ensemble de capteurs (50) est conçu pour
• détecter un mouvement relatif et/ou une position relative des premier et deuxième éléments d'accouplement (21, 22) l'un par rapport à l'autre sur la base d'une grandeur de mesure magnétique ou d'une grandeur de mesure dérivée de celle-ci qui dépend du mouvement relatif et/ou de la position relative des premier et deuxième éléments d'accouplement (21, 22) l'un par rapport à l'autre et/ou du premier élément d'accouplement (21) par rapport à un endroit mécaniquement désaccouplé de la position et du mouvement du module d'accouplement (20) sur le véhicule (1) de base, et
• déterminer la présence ou l'absence d'un état accouplé et/ou désaccouplé entre les premier et deuxième éléments d'accouplement (21, 22) et donc de l'arbre menant (15) et de l'arbre mené (60) du dispositif d'entraînement (80) à partir du mouvement relatif et/ou d'une position relative des premier et deuxième éléments d'accouplement (21, 22).

2. Ensemble de capteurs (50) selon la revendication 1, dans lequel le premier composant de capteur (81) est réalisé sur, en particulier comme une partie d'un capteur de couple (50') pour la détection - en particulier magnétique ou sur une base magnétique - d'un couple agissant sur l'arbre mené (16), en particulier sous la forme d'un capteur magnétique (52) du capteur de couple (50').

3. Ensemble de capteurs (50) selon la revendication 1 ou 2, dans lequel le deuxième composant de capteur (82) est réalisé sous la forme d'un aimant, d'une zone de matériau magnétique sur ou dans le premier élément d'accouplement (21), en particulier d'une zone de matériau du premier élément d'accouplement (21) qui est modifiée par une aimantation.

4. Procédé de commande de fonctionnement permettant de déterminer un état accouplé et/ou désaccouplé entre un premier et un deuxième élément d'accouplement (21, 22) d'un module d'accouplement (20) d'un arbre menant (15) et d'un arbre mené (16) d'un dispositif d'entraînement (80) d'un véhicule (1) pouvant être entraîné par la force musculaire et en plus par une force de moteur, en particulier d'un vélo électrique, d'un e-bike ou d'un pédélec, comprenant
• un premier composant de capteur (81) qui présente au moins un capteur magnétique (52),
le premier composant de capteur (81) étant réalisé
∘ (i) à un endroit mécaniquement désaccouplé de la position et du mouvement du module d'accouplement (20) sur le véhicule (1) de base, ou
∘ (ii) en pouvant se déplacer avec le deuxième élément d'accouplement (22), et
• un deuxième composant de capteur (82) qui présente un élément transmetteur magnétique ou ayant une influence magnétique,
le deuxième composant de capteur (82) étant réalisé en pouvant se déplacer avec le premier élément d'accouplement (21) pour exercer une influence magnétique sur le premier composant de capteur (81),
**caractérisé en ce que** le procédé de commande de fonctionnement
• détecte un mouvement relatif et/ou une position relative des premier et deuxième éléments d'accouplement (21, 22) l'un par rapport à l'autre sur la base d'une grandeur de mesure magnétique ou d'une grandeur de mesure dérivée de celle-ci qui dépend du mouvement relatif et/ou de la position relative des premier et deuxième éléments d'accouplement (21, 22) l'un par rapport à l'autre et/ou du premier élément d'accouplement (21) par rapport à un endroit mécaniquement désaccouplé de la position et du mouvement du module d'accouplement (20) sur le véhicule (1) de base, et
• détermine la présence ou l'absence d'un état accouplé et/ou désaccouplé entre les premier et deuxième éléments d'accouplement (21, 22) et donc de l'arbre menant (15) et de l'arbre mené (60) du dispositif d'entraînement (80) à partir du mouvement relatif et/ou d'une position relative des premier et deuxième éléments d'accouplement (21, 22).

5. Dispositif de commande (10) destiné au dispositif d'entraînement (80) d'un véhicule (1) pouvant être entraîné par la force musculaire et en plus par une force de moteur, en particulier d'un vélo électrique, d'un e-bike ou d'un pédélec, qui
- est conçu pour exécuter un procédé de commande de fonctionnement selon la revendication 4, et
- présente un ensemble de capteurs (50) selon l'une quelconque des revendications 1 à 3 ou une liaison de communication avec un ensemble de capteurs (50) selon l'une quelconque des revendications 1 à 3.

6. Véhicule (1) pouvant être entraîné par la force musculaire et en plus par une force de moteur, en particulier un vélo électrique, un e-bike ou un pédélec, comprenant
- un dispositif d'entraînement (80),
- au moins une roue (9-2) pouvant être entraînée par le dispositif d'entraînement (80),
- un dispositif de commande (10) pour commander le dispositif d'entraînement (80), en particulier selon la revendication 5,
- ainsi qu'un ensemble de capteurs (50) selon l'une quelconque des revendications 1 à 3.
